# EUROPEAN PATENT APPLICATION

(11) **EP 4 152 186 A1**
(43) Date of publication of application: **22.03.2023**
(21) Application number: 22188623.7
(22) Date of filing: 03.08.2022
(51) Int. Cl.: G06F 21/35, B60R 25/24, G06Q 10/02, G07C 9/00, H04W 4/80

(54) **VEHICLE MANAGEMENT SERVER**

(30) Priority: 17.09.2021 JP 2021151706
(71) Applicant: Suzuki Motor Corporation, Hamamatsu-shi, Shizuoka 432-8611 (JP)
(72) Inventor: HAZAMA, Katsuhiro, Hamamatsu-shi, Shizuoka 432-8611 (JP)
(74) Representative: Plasseraud IP

(57) **Abstract**

A vehicle management server 3 includes a managing part that manages a plurality of user accounts respectively corresponding to a plurality of users who use a vehicle; and a distributing part that distributes an electronic key of the vehicle to at least one of a plurality of terminals respectively held by the plurality of users. The plurality of user accounts include a highest-level account, a middle-level account, and a lowest-level account. The managing part manages the highest-level account as a user account authorized to register or delete the middle-level and the lowest-level account, manages the middle-level account as a user account authorized to register or delete the lowest-level account corresponding to the middle-level account, and manages the lowest-level account as a user account not authorized to register and delete other user accounts.

## Description

### [Technical Field]

The present invention relates to a vehicle management server.

### [Background Art]

Patent Literature 1 discloses a vehicle control device characterized by comprising: a storage part that stores terminal information on a mobile terminal; a communication part that communicates with the mobile terminal based on the terminal information stored in the storage part; an authentication information generating part that generates authentication information to permit a start-up of a vehicle; an authentication information notifying part that notifies the vehicle of the authentication information generated by the authentication information generating part; a vehicle start-up authenticating part that performs, when the communication part receives, from the mobile terminal, the authentication information notified by the authentication information notifying part, authentication about the start-up of the vehicle based on the received authentication information; and a vehicle start-up permitting part that permits the start-up of the vehicle based on an authentication result by the vehicle start-up authenticating part.

### [Citation List]

### [Patent Literature]

[Patent Literature 1] JP 2020-157860 A

### [Summary of Invention]

### [Problem to be Solved by the Invention]

In the prior art, regarding a passenger vehicle that is used for car sharing and is sequentially used by a plurality of users, an owner of the passenger vehicle registers user accounts by dividing the users into specific users and non-specific users. A non-specific user applies for a date and time, and a period of use, to the owner, and when the owner approves the application, an electronic key is issued to the non-specific user. The non-specific user uses the electronic key to use the passenger vehicle. While only the owner is authorized to register or approve the user accounts, the specific users or the non-specific users are not authorized. Accordingly, vehicle management may become cumbersome for the owner.

Under these circumstances, an object of the present invention is to ensure that the burden of managing a vehicle that is sequentially used by a plurality of users is not concentrated on a particular person.

### [Means for Solving the Problem]

In order to accomplish the object, a vehicle management server according to the present invention comprises: a managing part that manages a plurality of user accounts respectively corresponding to a plurality of users who use a vehicle; and a distributing part that distributes an electronic key of the vehicle to at least one of a plurality of terminals respectively held by the plurality of users. The plurality of user accounts include a highest-level account, a middle-level account, and a lowest-level account. The managing part manages the highest-level account and the middle-level account in association with each other and manages the middle-level account and the lowest-level account in association with each other, manages the highest-level account as a user account authorized to apply for registration or deletion of the middle-level account and the lowest-level account corresponding to the highest-level account, manages the middle-level account as a user account authorized to apply for registration or deletion of the lowest-level account corresponding to the middle-level account, and manages the lowest-level account as a user account not authorized to apply for registration and deletion of other user accounts.

### [Advantageous Effect of Invention]

The present invention can ensure that the burden of managing a vehicle that is sequentially used by a plurality of users is not concentrated on a particular person.

### [Brief Description of Drawings]

[Figure 1] Figure 1 is an explanatory view showing a vehicle management system.
[Figure 2] Figure 2 is a functional block diagram of a connected car management server.
[Figure 3] Figure 3 is a flowchart showing a flow of electronic key distribution processing for a highest-level account.
[Figure 4] Figure 4 is a flowchart showing the flow of electronic key distribution processing for a middle-level account.
[Figure 5] Figure 5 is a flowchart showing the flow of electronic key distribution processing for a lowest-level account.
[Figure 6] Figure 6 is a flowchart showing the flow of electronic key distribution processing in a car sharing service.

### [Mode for Carrying Out the Invention]

Embodiments of the present invention will be described below with reference to the accompanying drawings. However, the present invention is not limited to the embodiments stated below.

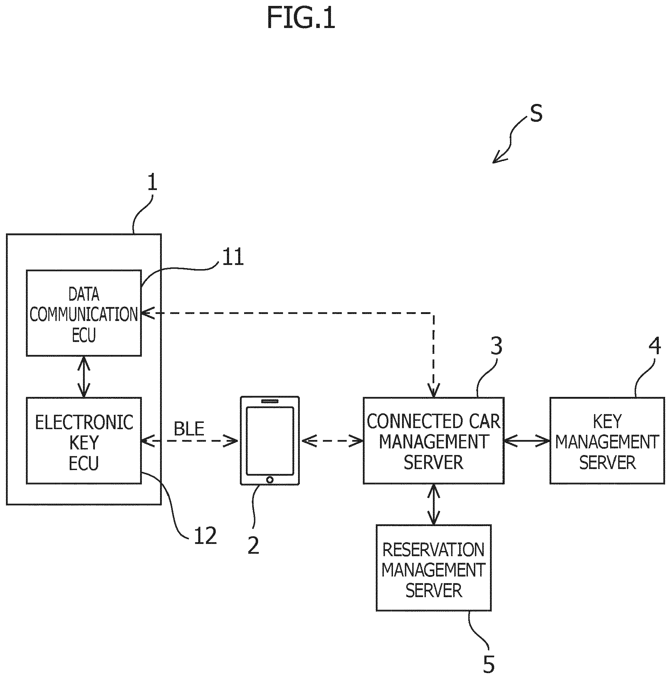

As shown in Figure 1, a vehicle management system S includes a vehicle 1, such as a passenger vehicle, and a terminal 2, which is held by each of a plurality of users who sequentially use the vehicle 1. The vehicle 1 is a connected car having a data communication ECU 11 and an electronic key ECU 12. The vehicle management system S further includes a connected car management server 3, a key management server 4 and a reservation management server 5.

The data communication ECU 11 and the connected car management server 3 are configured to be communicable with each other. The electronic key ECU 12 and the terminal 2 are configured to allow short-distance radio communication via Bluetooth low energy (BLE) and other devices. The terminal 2 and the connected car management server 3 are configured to be communicable with each other. The connected car management server 3 is configured to be communicable with the key management server 4 and the reservation management server 5.

An electronic key for using the vehicle 1 is granted to the terminal 2. The electronic key can be granted by the key management server 4 via the connected car management server 3. When the terminal 2 to which the electronic key is granted performs short-distance radio communication with the electronic key ECU 12 of the vehicle 1 that is in a locked state, the electronic key ECU 12 communicates with the connected car management server 3 through the data communication ECU 11 to authenticate the electronic key granted to the terminal 2. When the electronic key is authenticated to be legitimate, the vehicle 1 is unlocked and the vehicle 1 can be started. At the end of the use of the vehicle 1, the terminal 2 can also communicate with the electronic key ECU 12 to lock the vehicle 1.

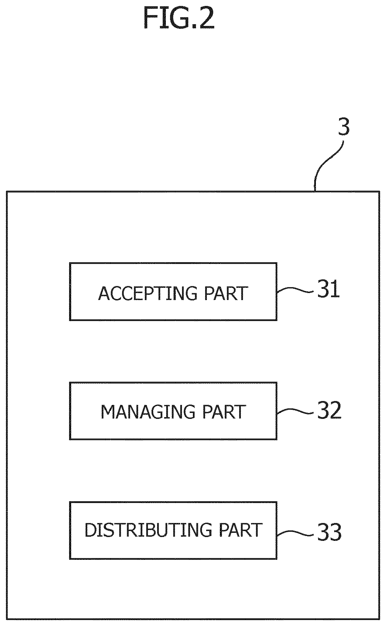

As shown in Figure 2, the connected car management server 3 includes an accepting part 31, a managing part 32, and a distributing part 33. The details of each part will be described later.

The connected car management server 3, also called a vehicle management server, has a list for managing a plurality of users who sequentially use the vehicle 1. In this list, accounts of the plurality of users are divided into any one of a highest-level account granted with highest-level authority, a middle-level account granted with middle-level authority, and a lowest-level account granted with lowest-level authority, and managed accordingly.

The key management server 4, at the request of the connected car management server 3, generates an electronic key and distributes the electronic key to the connected car management server 3. The reservation management server 5 performs reservation management of the vehicle 1 in a car share service.

The connected car management server 3 is constituted of computer hardware. The connected car management server 3 includes a CPU, an interface device, a display device, an input device, a drive device, an auxiliary storage device, and a memory device, which are not illustrated, and these devices are connected to each other via a bus.

Programs that implement the functions of the connected car management server 3 are provided by a recording medium such as a CD-ROM. When the recording medium that has the programs recorded thereon is set in the drive device, the programs are installed in the auxiliary storage device from the recording medium through the drive device. Alternatively, installation of the programs does not necessarily need to be conducted by the recording medium, and the programs may be downloaded from other computers via a network. The auxiliary storage device stores the installed programs, and also stores required files, data, and the like.

When an instruction is provided to activate a program, the memory device reads the program from the auxiliary storage device and stores the read program. The CPU implements the functions of the connected car management server 3 according to the programs stored in the memory device. The interface device is used as an interface for establishing a connection with other computers via the network. The display device displays a graphical user interface (GUI), or the like, according to a program. The input device is a keyboard, a mouse, or the like.

Here, the vehicle 1, the terminal 2, the key management server 4, and the reservation management server 5 have the graphical user interface that is the same as that in the connected car management server 3.

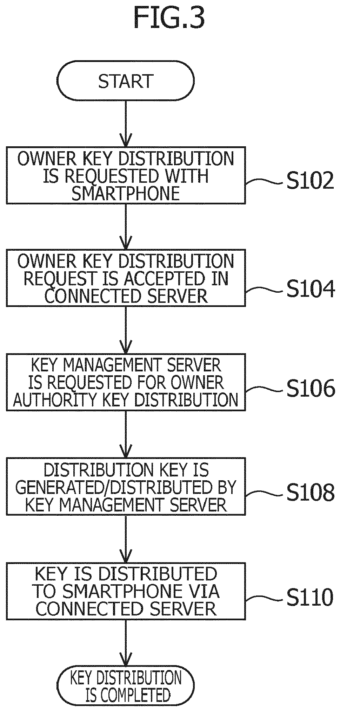

Figure 3 shows a flow of owner key distribution in an owner key service. The owner key service is a service that makes a vehicle, owned by an owner who is a general user, available to the owner or other persons (e.g., family and friends of the owner). The processing shown in Figure 3 distributes an owner authority key to the owner.

First, in step S102, the terminal 2 of the owner receives an input from the owner and transmits an owner key distribution request to the connected car management server 3.

In subsequent step S104, the accepting part 31 in the connected car management server 3 accepts the owner key distribution request sent from the terminal 2 in the step S102.

In subsequent step S106, the managing part 32 in the connected car management server 3 sends an owner authority key distribution request to the key management server 4.

In subsequent step S108, the key management server 4 generates a key and distributes the key to the connected car management server 3.

In subsequent step S110, the distributing part 33 in the connected car management server 3 receives the key distributed from the key management server 4 in step S108, and sends the key to the terminal 2 of the owner.

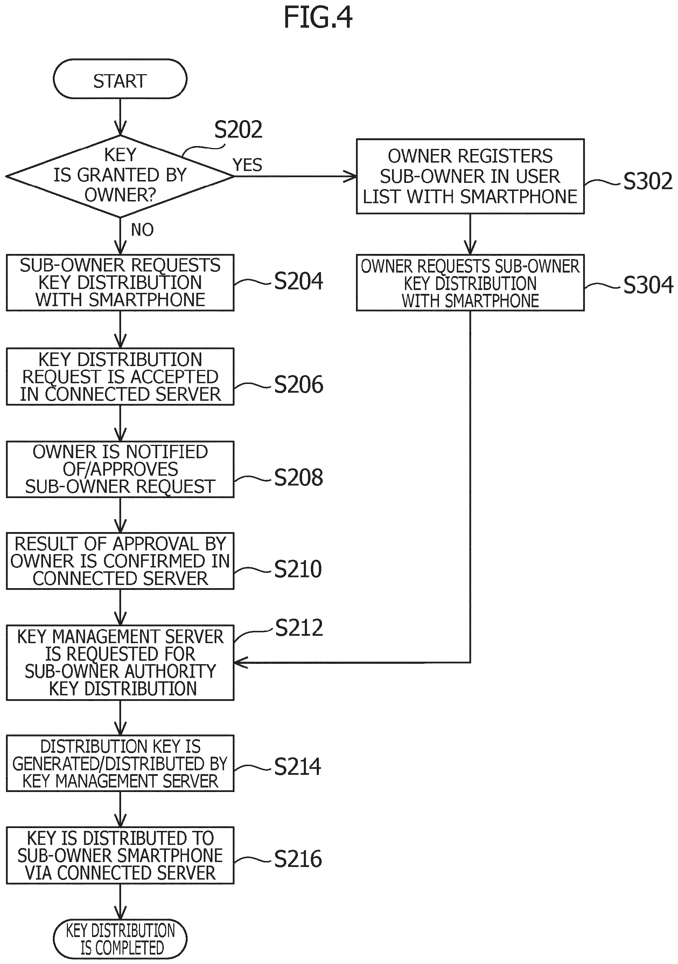

Figure 4 shows a flow of owner key distribution in the owner key service. This processing distributes a sub-owner authority key to a sub-owner.

Step S202 is a step branching into whether the key distribution to the sub-owner is at the request of the sub-owner themselves or at the request of the owner. In the former case, step S204 is subsequently performed, whereas in the latter case, step S302 is subsequently performed. In this way, the system allows both the sub-owner and the owner to apply for a key.

In step S204, the terminal 2 of the sub-owner receives an input from the sub-owner, and transmits a key distribution request to the connected car management server 3.

In subsequent step S206, the accepting part 31 in the connected car management server 3 accepts the key distribution request sent from the terminal 2 of the sub-owner in step S204.

In subsequent step S208, the managing part 32 in the connected car management server 3 notifies the terminal of the owner that the key distribution request from the sub-owner has been accepted. In this step, upon reception of the notification, the owner further makes an input in the terminal of the owner to approve the distribution of the key to the sub-owner. Upon reception of the input, the terminal of the owner notifies the connected car management server 3 that the key distribution has been approved.

In subsequent step S210, the managing part 32 in the connected car management server 3 receives the notification from the terminal of the owner, and confirms the result of approval by the owner.

In subsequent step S212, the managing part 32 in the connected car management server 3 sends a sub-owner authority key distribution request to the key management server 4.

In subsequent step S214, the key management server 4 generates a key and distributes the key to the connected car management server 3.

In subsequent step S216, the distributing part 33 in the connected car management server 3 receives the key distributed by the key management server 4 in step S214, and sends the key to the terminal 2 of the sub-owner.

In step S302, the owner performs a procedure to register the sub-owner in a user list using the terminal of the owner themselves. The contents of the procedure are sent from the terminal of the owner to the connected car management server 3. After the accepting part 31 in the connected car management server 3 accepts the contents of the procedure, the managing part 32 updates the list. As a result, the pertinent user is registered as a sub-owner in the list.

In subsequent step S304, the owner, using the terminal of the owner themselves, requests the connected car management server 3 to distribute the key to the sub-owner. Then, step S212 is performed.

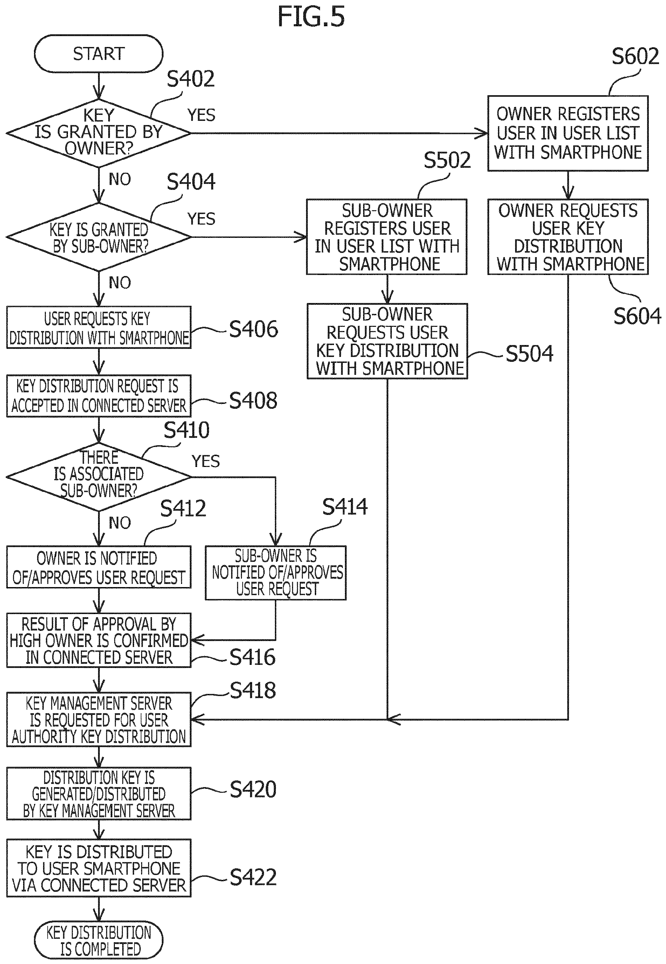

Figure 5 shows a flow of user key distribution in the owner key service. This processing distributes a user authority key to a user.

Steps S402 and S404 are steps branching into whether the key distribution to the user is at the request of the user themselves or at the request of the owner. When the key distribution is at the request of the user themselves, step S406 is subsequently performed. When the key distribution is at the request of the sub-owner, step S502 is subsequently performed. When the key distribution is at the request of the owner, step S602 is subsequently performed. In this way, the system allows all of the user, the sub-owner and the owner to apply for a key.

In step S406, upon reception of an input by the user, the terminal 2 of the user sends a key distribution request to the connected car management server 3.

In subsequent step S408, the accepting part 31 in the connected car management server 3 accepts the key distribution request sent from the terminal 2 of the user in step S204.

In subsequent step S410, the managing part 32 in the connected car management server 3 determines whether there is a sub-owner associated with the user. When it is determined that a sub-owner associated with the user exists, step S414 is performed. Otherwise, step S412 is performed.

In subsequent step S412, the managing part 32 in the connected car management server 3 notifies the terminal of the owner that the key distribution request from the user has been accepted. In this step, upon reception of the notification, the owner further makes an input in the owner terminal to approve the distribution of the key to the user. Upon reception of the input, the terminal of the owner notifies the connected car management server 3 that the key distribution has been approved. Then, step S416 is performed.

In step S414, the managing part 32 in the connected car management server 3 notifies the terminal of the sub-owner that the key distribution request from the user has been accepted. In this step, upon reception of the notification, the sub-owner further makes an input in the terminal of the sub-owner to approve the distribution of the key to the user. Upon reception of the input, the terminal of the sub-owner notifies the connected car management server 3 that the key distribution has been approved. Then, step S416 is performed.

In step S416, the managing part 32 in the connected car management server 3 performs one of first processing and second processing described below.

First processing: receiving the notification sent from the terminal of the owner in step S412 and confirming the result of approval by the owner.

Second processing: receiving the notification sent from the terminal of the sub-owner in step S414 and confirming the result of approval by the sub-owner.

In subsequent step S418, the distributing part 33 in the connected car management server 3 sends a user authority key distribution request to the key management server 4.

In subsequent step S420, the key management server 4 generates a key and distributes the key to the connected car management server 3.

In subsequent step S422, the distributing part 33 in the connected car management server 3 receives the key distributed from the key management server 4 in step S214, and sends the key to the terminal 2 of the user.

In step S502, the sub-owner performs a procedure to register the user in the user list using the terminal of the sub-owner themselves. The contents of the procedure are sent from the terminal of the sub-owner to the connected car management server 3. After the accepting part 31 in the connected car management server 3 accepts the contents of the procedure, the managing part 32 updates the list. As a result, the pertinent user is registered as a user in the list.

In subsequent step S504, the sub-owner, using the terminal of the sub-owner themselves, requests the connected car management server 3 to distribute the key to the user. Then, step S418 is performed.

In step S602, the owner performs a procedure to register the user in the user list using the terminal of the owner themselves. The contents of the procedure are sent from the terminal of the owner to the connected car management server 3. After the accepting part 31 in the connected car management server 3 accepts the contents of the procedure, the managing part 32 updates the list. As a result, the pertinent user is registered as a user in the list.

In subsequent step S604, the owner, using the terminal of the owner themselves, requests the connected car management server 3 to distribute the key to the user. Then, step S418 is performed.

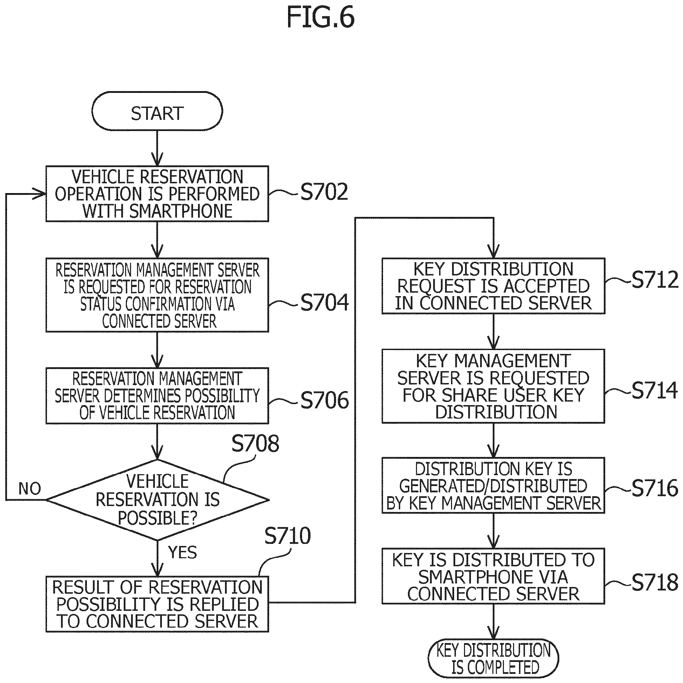

Figure 6 shows a flow of the car share service. The car share service is different, in the point that car share service is assumed to be used by corporations, from the owner-key service which is assumed to be used by general users.

First, in step S702, upon reception of vehicle reservation operation by a user of the car share service, the terminal 2 of the user sends a reservation request to the connected car management server 3. The reservation request is accepted by the accepting part 31 in the connected car management server 3.

In subsequent step S704, the managing part 32 in the connected car management server 3 sends the reservation request to the reservation management server 5.

In subsequent step S706, the reservation management server 5 determines the possibility of vehicle reservation based on the reservation request sent from the connected car management server 3 in step S704.

In subsequent step S708, the reservation management server 5 determines whether the vehicle reservation based on the reservation request is possible. When it is determined that the vehicle reservation based on the reservation request is possible, step S710 is performed.

When it is not determined that the vehicle reservation based on the reservation request is possible, the reservation management server 5 sends a message that the vehicle reservation is not possible to the connected car management server 3, and the managing part 32 in the connected car management server 3 also sends the message to the terminal of the user. Then, step S702 is performed again.

In step S710, the reservation management server 5 notifies the connected car management server 3 of the result of reservation possibility, i.e., the message that the reservation is possible in this case, to the connected car management server 3.

In subsequent step S712, the accepting part 31 in the connected car management server 3 accepts the key distribution request sent from the terminal 2 of the user.

In subsequent step S714, the managing part 32 in the connected car management server 3 sends a user authority key distribution request to the key management server 4.

In subsequent step S716, the key management server 4 generates a key and distributes the key to the connected car management server 3.

In subsequent step S718, the distributing part 33 in the connected car management server 3 receives the key distributed by the key management server 4 in step S108, and sends the key to the terminal 2 of the user.

In the embodiments disclosed, the managing part 32 classifies user accounts of the vehicle 1 into a highest-level account, a middle-level account, and a lowest-level account, and manages them accordingly.

The highest-level account may be a user account corresponding to the owner of a vehicle.

The highest-level account is authorized to apply for registration or deletion of the middle-level account and the lowest-level account.

The middle-level account is authorized to apply for registration or deletion of the lowest-level account when the highest-level account permits doing so.

The lowest-level account is managed as a user account not authorized to apply for registration and deletion of other user accounts.

The highest-level account is managed in association with the registered middle-level accounts and lowest-level accounts.

The middle-level accounts are managed in association with the registered lowest-level accounts.

The middle-level accounts are authorized to set a usable period and a usable time slot for each of the registered lowest-level accounts.

As described in the foregoing, each embodiment shown in Figures 3 to 5 can be used in the owner key service, and the embodiment shown in Figure 6 can be used in the car share service. In other words, in both the owner key service and the car share service, the configuration including the highest-level account, the middle-level account, and the lowest-level account may be adopted.

In the prior art, the highest-level account (i.e., the owner of the vehicle) manages all the user accounts. However, according to the present embodiment, a plurality of middle-level accounts (sub-owners) are provided, and each of the middle-level accounts is associated with a plurality of lowest-level accounts (users). The middle-level accounts each manage a relatively small number of lowest-level accounts associated with the respective middle-level accounts instead of managing all the lowest-level accounts associated with the highest-level account. As a result, part of management burden of the highest-level account is distributed to a plurality of middle-level accounts, so that the management burden of the highest-level account is reduced. It is also expected to achieve enhanced management system and security.

Specifically, the key management server, in response to an application from the highest-level account, grants a prescribed authority, and manages the accounts accordingly.

The highest-level account rents a vehicle to a middle-level account (sub-owner) for a certain period of time.

The middle-level account (sub-owner) can distribute an electronic key to a lowest-level account (user) as the owner key service or the car share service within the range of the granted authority.

The lowest-level account (user) reserves the distribution of the key with specifying a date and time and a period for use, so that the lowest-level account can receive the key and use the vehicle.

When the highest-level account is deleted from the list, the middle-level accounts and the lowest-level accounts associated with the highest-level account are collectively deleted in conjunction with the deletion.

When the middle-level accounts are deleted from the list, the lowest-level accounts associated with the middle-level accounts are collectively deleted in conjunction with the deletion.

When applying for registration of the lowest-level accounts, the highest-level account can associate the lowest-level accounts with any middle-level accounts.

Accordingly, when a certain account is deleted, the accounts associated with the certain account are collectively deleted in conjunction with the deletion. This avoids the mistake of forgetting to delete unnecessary accounts, and facilitates easy management.

The key management server issues keys, to which different functions and authority for each of the three accounts are granted. For example, different functions and authority can be granted in determining the following points:
- Reset operation regarding a travel distance
- ON-operation of remote ignition by an electronic key
- ON-operation of remote air conditioner by an electronic key
- Limiting opening/closing operation of doors and a trunk by the electronic key

The highest-level account can register account information on the middle-level accounts and the lowest-level accounts in the connected car management server.

A period and a time slot available for the middle-level accounts and the associated lowest-level accounts can be set.

The account information on the highest-level account, the middle-level accounts and the lowest-level accounts can be deleted from the connected server.

When the account information on the highest-level account is deleted, the account information on the associated middle-level accounts and lowest-level accounts is collectively deleted in conjunction with the deletion.

Similarly, when the account information on the middle-level accounts is deleted, the account information on the associated lowest-level accounts is collectively deleted in conjunction with the deletion.

The account information on the lowest-level accounts can be associated with any middle-level accounts.

It is possible to receive notification of reservation application by the lowest-level accounts.

The middle-level accounts (sub-owners) can register and delete the lowest-level accounts in/from the connected car management server.

The authority of the highest-level account can restrain (disable) the authority of the middle-level accounts regarding registration and deletion.

It is possible to receive notification of reservation application by the lowest-level accounts.

The lowest-level accounts (users) can be the user accounts not authorized to register and delete other user accounts in/from the connected car management server.

When the lowest-level account makes an application for a desired use condition (date and time, time slot, location, etc.), the vehicle reservation management server checks vehicle availability, and the reservation is made if available. In other words, the application is automatically approved by the middle-level account or the highest-level account associated with the pertinent lowest-level account.

Alternatively, manual approval can be done by the highest-level account or the middle-level accounts.

Switching between automatic and manual approvals can be performed by the highest-level account or the middle-level accounts.

In the case of searching for a certain lowest-level account in the user list, providing the middle-level accounts makes it possible to target only a plurality of lowest-level accounts that are associated with a certain middle-level account as search objects instead of targeting all the lowest-level accounts. Hence, as compared with the case in which the middle-level accounts are not provided and all the user accounts associated with the account of the owner are targeted as search objects, the search objects are narrowed and improved search speed is expected. Therefore, according to each embodiment of the present invention, enhancement in computer performance can be expected.

In connection with the embodiments described above, following appendixes are disclosed.

### Appendix 1

A vehicle management server comprising:
a managing part that manages a plurality of user accounts respectively corresponding to a plurality of users who use a vehicle; and
a distributing part that distributes an electronic key of the vehicle to at least one of a plurality of terminals respectively held by the plurality of users, wherein
the plurality of user accounts include a highest-level account, a middle-level account, and a lowest-level account,
wherein the managing part
manages the highest-level account and the middle-level account in association with each other,
manages the middle-level account and the lowest-level account in association with each other,
manages the highest-level account as a user account authorized to apply for registration or deletion of the middle-level account and the lowest-level account corresponding to the highest-level account,
manages the middle-level account as a user account authorized to apply for registration or deletion of the lowest-level account corresponding to the middle-level account, and
manages the lowest-level account as a user account not authorized to apply for registration and deletion of other user accounts.

### Appendix 2

The vehicle management server according to Appendix 1, wherein
the managing part
manages a plurality of middle-level accounts in association with the highest-level account, and
manages the highest-level account as a user account authorized to set a usable period and a usable time slot of the vehicle for each of the plurality of middle-level accounts,
wherein the distributing part
distributes to each of the plurality of middle-level accounts an electronic key that permits use of the vehicle during the usable period and the usable time slot of the vehicle set by the highest-level account,
wherein the managing part
manages a plurality of lowest-level accounts in association with the middle-level accounts, and
manages the middle-level accounts as user accounts authorized to set the usable period and the usable time slot of the vehicle for each of the plurality of lowest-level accounts within a range set by the highest-level account,
wherein the distributing part
distributes to each of the plurality of lowest-level accounts an electronic key that permits use of the vehicle during the usable period and the usable time slot of the vehicle set by the middle-level accounts.

### Appendix 3

The vehicle management server according to Appendix 2,
further comprising an accepting part that accepts an application for registration of a user account, wherein
when the accepting part accepts the application for registration of a lowest-level account from the highest-level account, the managing part associates the lowest-level account with any one of the plurality of middle-level accounts.

### Appendix 4

The vehicle management server according to any one of Appendices 1 to 3, wherein the managing part manages the highest-level account as a user account authorized to set a usable period and a usable time slot of the vehicle for each of the plurality of middle-level accounts corresponding to the highest-level account so as to avoid double-booking.

### Appendix 5

The vehicle management server according to Appendix 4, wherein
the accepting part
accepts an application for use of the vehicle from the lowest-level account,
notifies the highest-level account or the middle-level account associated with the lowest-level account that the application for use of the vehicle has been made, and
accepts approval of the application for use of the vehicle from the highest-level account or the middle-level account,
wherein the distributing part distributes an electronic key in accordance with the application for use of the vehicle to the lowest-level account.

### Appendix 6

The vehicle management server according to Appendix 5, wherein
the managing part
manages the highest-level account as a user account authorized to restrict use of functions provided in the vehicle by the middle-level accounts and the lowest-level accounts associated with the highest-level account, and
manages the middle-level accounts as user accounts authorized to restrict use of the functions provided in the vehicle by the middle-level accounts and the lowest-level accounts associated with the middle-level accounts within a range of authority granted from the highest-level account.

### Appendix 7

The vehicle management server according to Appendix 6, wherein
when an application for deletion of the highest-level account has been made, the managing part deletes the highest-level account from a list and also deletes the middle-level accounts associated with the highest-level account and the lowest-level accounts associated with the middle-level accounts from the list, and
when an application for deletion of the middle-level account has been made, the managing part deletes the middle-level account from the list, and also delete the lowest-level accounts associated with the middle-level account from the list.

### Appendix 8

The vehicle management server according to Appendix 7, wherein an application for registration and an application for deletion of the user account are completed by multi-factor authentication.

The embodiments of the present invention have been described in the foregoing. It should be noted that the present invention is not limited to the embodiments disclosed. Modifications and changes are possible based on the technical ideas of the present invention.

### [Reference Signs List]

- S: Vehicle management system
- 1: Vehicle
- 2: Terminal
- 3: Connected car management server
- 31: Accepting part
- 32: Managing part
- 33: Distributing part
- 4: Key management server
- 5: Reservation management server

## Claims

1. A vehicle management server comprising:
a managing part that manages a plurality of user accounts respectively corresponding to a plurality of users who use a vehicle; and
a distributing part that distributes an electronic key of the vehicle to at least one of a plurality of terminals respectively held by the plurality of users,
wherein the plurality of user accounts include a highest-level account, a middle-level account, and a lowest-level account, and
wherein the managing part
manages the highest-level account and the middle-level account in association with each other, manages the middle-level account and the lowest-level account in association with each other,
manages the highest-level account as a user account authorized to apply for registration or deletion of the middle-level account and the lowest-level account corresponding to the highest-level account,
manages the middle-level account as a user account authorized to apply for registration or deletion of the lowest-level account corresponding to the middle-level account, and
manages the lowest-level account as a user account not authorized to apply for registration and deletion of other user accounts.

2. The vehicle management server as claimed in claim 1, wherein the managing part
manages a plurality of middle-level accounts in association with the highest-level account, and
manages the highest-level account as a user account authorized to set a usable period and a usable time slot of the vehicle for each of the plurality of middle-level accounts,
wherein the distributing part
distributes to each of the plurality of middle-level accounts an electronic key that permits use of the vehicle during the usable period and the usable time slot of the vehicle set by the highest-level account,
wherein the managing part
manages a plurality of lowest-level accounts in association with the middle-level accounts, and
manages the middle-level accounts as user accounts authorized to set the usable period and the usable time slot of the vehicle for each of the plurality of lowest-level accounts within a range set by the highest-level account,
wherein the distributing part
distributes to each of the plurality of lowest-level accounts an electronic key that permits use of the vehicle during the usable period and the usable time slot of the vehicle set by the middle-level account.

3. The vehicle management server as claimed in claim 2,
further comprising an accepting part that accepts an application for registration of a user account, wherein
when the accepting part accepts the application for registration of a lowest-level account from the highest-level account, the managing part associates the lowest-level account with any one of the plurality of middle-level accounts.

4. The vehicle management server as claimed in any one of claims 1 to 3, wherein the managing part manages the highest-level account as a user account authorized to set a usable period and a usable time slot of the vehicle for each of the plurality of middle-level accounts corresponding to the highest-level account so as to avoid double-booking.

5. The vehicle management server as claimed in claim 4, wherein
the accepting part
accepts an application for use of the vehicle from the lowest-level account,
notifies the highest-level account or the middle-level account associated with the lowest-level account that the application for use of the vehicle has been made, and
accepts approval of the application for use of the vehicle from the highest-level account or the middle-level account,
wherein the distributing part distributes an electronic key in accordance with the application for use of the vehicle to the lowest-level account.

6. The vehicle management server as claimed in claim 5, wherein
the managing part
manages the highest-level account as a user account authorized to restrict use of functions provided in the vehicle by the middle-level accounts and the lowest-level accounts associated with the highest-level account, and
manages the middle-level accounts as a user account authorized to restrict use of the functions provided in the vehicle by the middle-level accounts and the lowest-level accounts associated with the middle-level accounts within a range of authority granted from the highest-level account.

7. The vehicle management server as claimed in claim 6, wherein
when an application for deletion of the highest-level account has been made, the managing part deletes the highest-level account from a list and also deletes the middle-level accounts associated with the highest-level account and the lowest-level accounts associated with the middle-level accounts from the list, and
when an application for deletion of the middle-level account has been made, the managing part deletes the middle-level account from the list, and also deletes the lowest-level accounts associated with the middle-level account from the list.

8. The vehicle management server as claimed in claim 7, wherein an application for registration and an application for deletion of the user account are completed by multi-factor authentication.
